# EUROPÄISCHE PATENTSCHRIFT

(11) **EP 1 608 575 B1**
(45) Veröffentlichungstag und Bekanntmachung des Hinweises auf die Patenterteilung: **28.03.2007**
(21) Anmeldenummer: 03720256.1
(22) Anmeldetag: 03.04.2003
(51) Int. Cl.: B65G 51/03, H01L 21/00

(54) **VORRICHTUNG ZUM ERZEUGEN EINER VORBESTIMMTEN ORIENTIERUNG**
DEVICE FOR PRODUCING A PREDETERMINED ORIENTATION
DISPOSITIF POUR PRODUIRE UNE ORIENTATION PREDETERMINEE

(43) Veröffentlichungstag der Anmeldung: 28.12.2005
(73) Patentinhaber: Universität Hannover, 30167 Hannover (DE); Braun GmbH, 61476 Kronberg im Taunus (DE)
(72) Erfinder: RYBARCZYK, Andreas, 31419 Hannover (DE); LUDWIG, Ralph, 61440 Oberursel (DE)
(86) Internationale Anmeldenummer: PCT/DE2003/001103
(87) Internationale Veröffentlichungsnummer: WO 2004/089793

(56) Entgegenhaltungen:
- GB-A- 2 275 903
- JP-A- 48 037 880
- US-A- 4 462 720

## Beschreibung

Die Erfindung betrifft eine Vorrichtung zum Erzeugen einer vorbestimmten Orientierung von vereinzelten auf einer Gleitfläche transportierten Werkstücken mittels einer auf die Werkstücke einwirkenden Luftströmung.

In der Praxis werden diese Vorrichtungen in der aerodynamischen Zuführtechnik eingesetzt. Mittels der aerodynamischen Zuführtechnik lassen sich Werkstücke aus einem chaotischen Haufen vereinzeln und orientieren, bevor sie dann in einer definierten vorbestimmten Lage und Orientierung für nachfolgende Bearbeitungs- und Montagevorgänge bereitgestellt werden. Das Orientieren der Werkstücke wird dabei im Wesentlichen durch Luftströmungen herbeigeführt, die auf das jeweilige Werkstück einwirken. Hierbei werden unterschiedliche strömungsmechanische Effekte wie Impulse, Auftriebsströmungen oder Strömungsfelder sowie die verschiedenen Werkstückeigenschaften wie beispielsweise der C_{w}-Wert, die Oberflächenbeschaffenheit, innen liegende Formmerkmale, Bohrungen oder der Schwerpunkt für die Orientierung der Werkstücke bzw. den Zuführprozess genutzt. Die Luftströmungen sind dabei senkrecht zu einer Bewegungsrichtung der Werkstücke angeordnet, um eine definierte Anströmung des Werkstückes zu gewährleisten und eine Ausnutzung der Werkstückeigenschaften zur Orientierung der Werkstücke zu ermöglichen.

Aus der US 4,462,720 ist eine Vorrichtung zum transportieren und fördern von vereinzelten Werkstücken, die auf einer Gleitfläche mittels einer auf die Werkstücke einwirkenden Luftströmung fortbewegt werden. Hierbei hat die Luftströmung eine Wirkung, die gegenüber einer Bewegungsrichtung der Werkstücke derart geneigt ist, dass eine resultierende Luftströmung aus der einwirkenden Luftströmung und der Luftströmung aufgrund der Bewegung des Werkstückes senkrecht zu der Bewegungsrichtung der Werkstücke angeordnet ist. Ferner ist ein geneigtes Strömungsleitelement vorgesehen, mit dem der Luftströmung auf der Gleitfläche eine bestimmte Wirkrichtung gegeben wird.

Aus der GB 2275903 A und JP 48037880 A sind weitere Vorrichtungen zur Förderung von Werkstücken auf einem Luftpolster bekannt.

Zur aerodynamischen Orientierung können drei grundsätzliche Wirkprinzipien unterschieden werden. Die Verfahren sind klassifiziert in Luftkissensysteme, bei denen die Orientierung auf einer flächigen Luftströmung erfolgt, und speziellen Luftströmungen zur axialen und radialen Orientierung. Auf einem flächigen Luftkissen können Werkstücke durch Nutzung des C_{w}-Wertes oder der Schwerpunktlage ausgerichtet und somit orientiert werden. Bei der axialen und radialen Orientierung rutscht das Werkstück auf einer um zwei Achsen geneigten Gleitfläche herunter und passiert dabei eine Luftströmung. Beim Passieren der Luftströmung werden die Werkstücke, die eine falsche Orientierung oder Lage aufweisen in die richtige Orientierung gedreht bzw. überführt, während Werkstücke mit einer richtigen Orientierung die Luftströmung ohne Drehung passieren können.

Als besonders nachteilig erweist sich die geringe Prozesssicherheit der Zuführeinrichtungen im Produktionsprozess. Trotz genauer Auslegung der Luftströmung kann eine Vielzahl von Werkstücken in der falschen Orientierung die Luftströmung ohne Drehung passieren oder aber Werkstücke mit der richtigen Orientierung werden in die falsche Orientierung gedreht. Die falsch orientierten Werkstücke verursachen, insbesondere bei den nachfolgenden Bearbeitungs- und Montagevorgängen, allerdings erhebliche Probleme, die beispielsweise zu Störungen und Ausfallzeiten der gesamten nachfolgenden Produktions- oder Montageanlage führen können. Hierdurch ist ein Kontrollsystem erforderlich, welches Werkstücke in der falschen Orientierung erkennt und aus dem Zuführprozess ausschleust. Durch diesen zusätzlichen Aufwand wird die Ausbringungsleistung der Zuführeinrichtung erheblich reduziert.

Vor diesem Hintergrund liegt der Erfindung die Aufgabe zugrunde, eine verbesserte Vorrichtung zum Erzeugen einer vorbestimmten Orientierung von Werkstücken zur Verfügung zu stellen.

Diese Aufgabe wird erfindungsgemäß mit einer Vorrichtung gemäß den Merkmalen des Anspruchs 1 gelöst. Die Unteransprüche 2 bis 11 betreffen besonders zweckmäßige Weiterbildungen der Erfindung.

Erfindungsgemäß ist also eine Vorrichtung vorgesehen, bei der die die Luftströmung eine Wirkrichtung hat, die gegenüber einer Bewegungsrichtung der Werkstücke derart geneigt ist, dass eine resultierende Luftströmung aus der einwirkenden Luftströmung und der Luftströmung aufgrund der Bewegung des Werkstückes senkrecht zu der Bewegungsrichtung der Werkstücke angeordnet ist. Die geneigte Luftströmung überlagert sich mit der Luftströmung aufgrund der Werkstückbewegung also derart, dass eine resultierende Luftströmung genau senkrecht auf das Werkstück einwirkt. Hierdurch werden optimale Kraftverhältnisse am Werkstück erreicht und die Eigenschaften der Werkstücke, wie beispielsweise eine Asymmetrie oder eine Schwerpunktlage, können noch wirkungsvoller für die Orientierung ausgenutzt werden, da die Luftströmung in definierten Bereichen auf das Werkstück einwirkt. Dadurch kann eine gegenüber dem Stand der Technik wesentlich sicherere Orientierung gewährleistet werden. Eine schräg gegen die Bewegung der Werkstücke gerichtete resultierende Luftströmung nach dem Stand der Technik, welche die Bewegung des Werkstückes abbremst, kann hierdurch also nahezu verhindert werden.

Dabei erweist es sich als besonders wirkungsvoll, dass neben der auf die Werkstücke einwirkenden Luftströmung zumindest eine weitere Luftströmung auf die Werkstücke einwirkt, die in Bewegungsrichtung der Werkstücke gerichtet ist. Hierdurch wird der Luftwiderstand der Werkstücke zusätzlich reduziert, was insbesondere bei großen und leichten Werkstücken sehr vorteilhaft ist. Ein Abbremsen der Werkstücke kann dadurch noch wirkungsvoller verhindert werden.

Eine besonders zweckmäßige Weiterbildung der Vorrichtung wird dadurch geschaffen, dass die Luftströmung als ein die Gleitfläche durchströmendes Luftkissen ausgebildet ist. Durch das Luftkissen wird eine Luftströmung zur Verfügung gestellt, mittels der Werkstücke unter Ausnutzung ihres C_{w}-Wertes oder der Schwerpunktlage orientiert werden. Weiterhin wird das Luftkissen als Medium für den Transport zu einer nachfolgenden Produktionsanlage oder einem zwischengeschalteten Puffer genutzt.

Eine weitere besonders vorteilhafte Ausführungsform der vorliegenden Erfindung wird auch dadurch erreicht, dass die Gleitfläche als Strömungsleitelement ausgebildet ist. Hierdurch wird eine Möglichkeit geschaffen, die erforderliche Neigung der Luftströmung bzw. des Luftkissens zu erreichen.

Dabei erweist es sich als wirkungsvoll, dass das Strömungsleitelement einstellbar ist. Durch die Einstellbarkeit des Strömungsleitelementes kann die Neigung der Luftströmung je nach Geometrie, Eigenschaften und Geschwindigkeit des Werkstückes variiert bzw. angepasst werden.

Als besonders praxisnah erweist sich eine Abwandlung der Vorrichtung, nach welcher der Gleitfläche ein oberhalb des Strömungsleitelementes angeordnetes Lochblech zugeordnet ist. Dabei kann das Lochblech zumindest abschnittsweise auf dem Strömungsleitelement aufliegen. Hierdurch wird eine Oberfläche zur Verfügung gestellt, auf welcher das Werkstück ohne Beeinträchtigungen orientiert und bewegt werden kann. Das Lochblech ist dabei derart ausgebildet, dass die Luftströmung, insbesondere die Neigung des Luftkissens, nicht beeinträchtigt wird.

Dabei erweist es sich als besonders vorteilhaft, wenn auf der dem Werkstück abgewandten Seite der Gleitfläche zumindest ein Gebläse oder Lüfter angeordnet ist. Durch das Gebläse kann eine Luftströmung erzeugt werden, die beispielsweise im Vergleich mit Druckluft einen wesentlich geringeren Anteil an den Orientierungsprozess störenden Turbolenzen aufweist.

Eine ebenfalls besonders zweckmäßige Weiterbildung der vorliegenden Erfindung wird auch dadurch erreicht, dass zwischen dem Gebläse und der Gleitfläche ein Strömungselement angeordnet ist, durch welches eine Gebläseluft gleichmäßig über die Gleitfläche verteilbar ist. Durch das Strömungselement wird ein Strömungswiderstand geschaffen, welcher die inhomogene Gebläseluft über die Gleitfläche vergleichmäßigt.

Eine weitere besonders vorteilhafte Ausführungsform der Vorrichtung wird auch dadurch geschaffen, dass zwischen dem Strömungselement und der Gleitfläche ein zweites Strömungselement angeordnet ist, durch welches unterschiedliche Strömungsgeschwindigkeiten über die Gleitfläche einstellbar sind. Hierdurch lässt sich die Stärke der Luftströmung bzw. des Luftkissens über die Länge der Gleitfläche variieren. Zu Beginn, wenn das Werkstück in den Bereich der Luftströmung gelangt, ist beispielsweise eine starke Luftströmung erforderlich, um das Werkstück in die gewünschte Orientierung zu bringen. Am Ende des Luftkissens sollte die Strömung schwächer sein, um das Werkstück vor der Übergabe an ein nachfolgendes System zu beruhigen.

Dabei ist es besonders wirkungsvoll, dass die Strömungselemente jeweils zumindest zwei aufeinander und relativ zueinander bewegliche Lochbleche aufweisen. Durch diese Lochbleche, welche beispielsweise als Siebblech ausgeführt sind, lassen sich je nachdem wie die Durchbrechungen der Lochbleche übereinander liegen unterschiedliche Strömungsquerschnitte freigeben und unterschiedliche Strömungsgeschwindigkeiten über die Gleitfläche einstellen. Vorzugsweise bleibt eines der Bleche unbewegt, während das zugeordnete Blech in einer Ebene parallel zu dem unbewegten Blech verschoben oder gedreht werden kann.

Eine besonders praxisnahe Ausgestaltung wird dadurch geschaffen, dass die Strömungselemente jeweils zumindest ein Justierelement aufweisen. Hierdurch wird eine Verstellung der Lochbleche relativ zueinander durchgeführt und gleichzeitig eine Fixierung in der gewünschten Stellung gewährleistet.

Die erfindungsgemäße Vorrichtung bzw. der dadurch zu erzielende Effekt lässt sich bei der radialen und axialen Orientierung auf einer um zwei Achsen geneigten Gleitfläche ebenso nutzen, wie auch bei der Orientierung bzw. Ausrichtung auf einem Luftkissen. Die erforderliche kontinuierliche Luftströmung wird hierbei durch eine punktförmige, linienförmige oder flächige Luftströmung realisiert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine Prinzipskizze einer Vorrichtung zum Orientieren von Werkstücken;
- Fig.2: ein Strömungselement aus Figur 1 gemäß der Ansicht II-II.

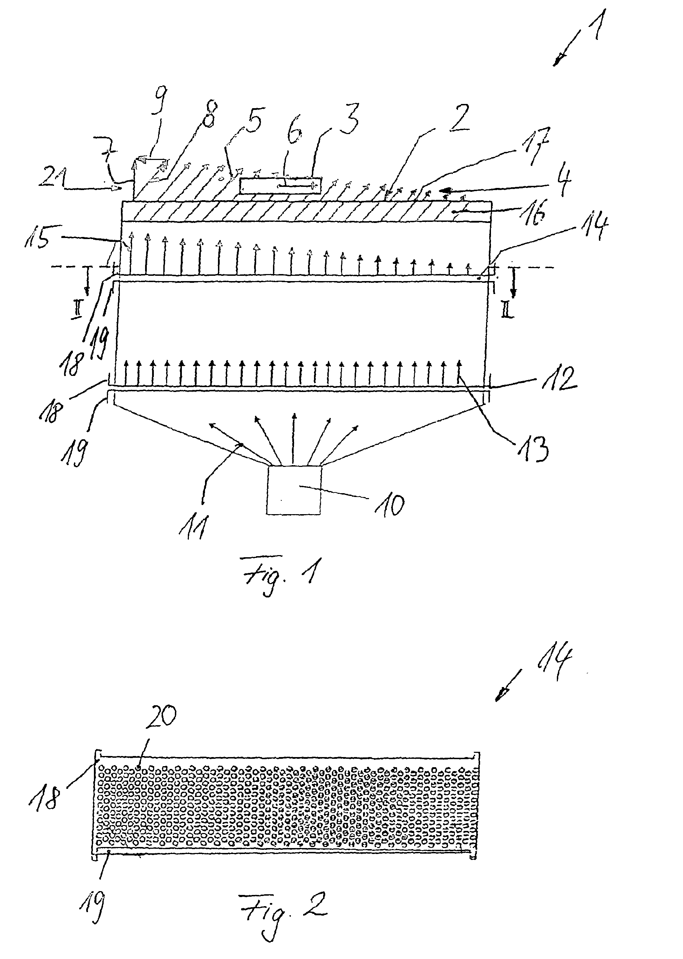

Figur 1 zeigt eine Prinzipskizze einer Vorrichtung 1 zum Orientieren von einem auf einer Gleitfläche 2 transportierten Werkstück 3 mittels einer als Luftkissen ausgebildeten Luftströmung 4. Die Luftströmung 4 hat eine Wirkrichtung 5, die gegenüber einer Bewegungsrichtung 6 des Werkstückes 3 geneigt angeordnet ist, so dass eine resultierende Luftströmung 7 aus der einwirkenden Luftströmung 8 und der Luftströmung 9 aufgrund einer Werkstückbewegung senkrecht zu der Bewegungsrichtung 6 des Werkstückes 3 angeordnet ist. Dabei entspricht die Luftströmung 9 aufgrund der Werkstückbewegung dem Luftwiderstand des Werkstückes 3 und ist daher entgegengesetzt der Bewegungsrichtung 6 des Werkstückes 3 ausgerichtet. Zusätzlich wirkt auf das Werkstück 3 eine weitere Luftströmung 21, welche in Bewegungsrichtung 6 des Werkstückes 3 gerichtet ist.

Die von einem Gebläse 10 erzeugte Gebläseluft 11 wird mittels eines ersten Strömungselementes 12 vergleichmäßigt, so dass ein homogenes Strömungsfeld 13 erzeugt wird, welches durch gleichmäßig lange Richtungspfeile angedeutet ist. Mittels eines zweiten Strömungselements 14 wird ein Strömungsprofil 15 erzeugt. Die unterschiedlich langen Richtungspfeile des Strömungsprofils 15 charakterisieren unterschiedliche Strömungsgeschwindigkeiten innerhalb des Strömungsprofils 15. Demnach nimmt die Strömungsgeschwindigkeit in Bewegungsrichtung 6 des Werkstückes 3 ab. Durch ein unterhalb der Gleitfläche 2 angeordnetes und als Waben- bzw. Lamellenelement ausgebildetes einstellbares Strömungsleitelement 16 wird das Strömungsprofil 15 anschließend derart gerichtet, dass die Wirkrichtung 5 der Luftströmung 4 die erforderliche Neigung gegenüber der Bewegungsrichtung 6 des Werkstückes 3 aufweist. Oberhalb des einstellbaren Strömungselementes 16 ist ein Lochblech 17 angeordnet, welches zumindest teilweise auf dem Strömungselement 16 aufliegt.

Die Strömungselemente 12, 14 werden jeweils von zwei Lochblechen 18, 19 gebildet, die übereinander angeordnet und relativ zueinander beweglich sind. Figur 2 zeigt das Strömungselement 14 aus Figur 1 gemäß der Ansicht II-II. Die als Siebbleche ausgebildeten Lochbleche 18, 19 weisen eine Vielzahl von gleichmäßig verteilten Durchbrechungen 20 auf. Wenn die Lochbleche 18, 19 bzw. die Durchbrechungen 20 der beiden Lochbleche 18, 19 passgenau übereinander angeordnet sind wird der größte mögliche Öffnungsquerschnitt freigegeben. Durch ein Verschieben des Lochblechs 18 bezüglich des Lochbleches 19 wird dieser Öffnungsquerschnitt verändert. Hierdurch lassen sich unterschiedliche Öffnungsquerschnitte und dadurch auch unterschiedliche Strömungsgeschwindigkeiten über die gesamte Fläche des Strömungselementes 14 einstellen.

## Patentansprüche

1. Vorrichtung (1) zum Erzeugen einer vorbestimmten Orientierung von vereinzelten auf einer Gleitfläche (2) transportierten Werkstücken (3) mittels einer auf die Werkstücke (3) einwirkenden Luftströmung (4), wobei die Luftströmung (4) eine Wirkrichtung (5) hat, die gegenüber einer Bewegungsrichtung (6) der Werkstücke (3) derart geneigt ist, dass eine resultierende Luftströmung (7) aus der einwirkenden Luftströmung (8) und der Luftströmung (9) aufgrund der Bewegung des Werkstückes (3) senkrecht zu der Bewegungsrichtung (6) der Werkstücke (3) angeordnet ist, **dadurch gekennzeichnet, dass** ein erstes Strömungselement (12) zur Vergleichmässigung der Gebläseluft (11), ein zweites Strömungselement (14) zur Erzeugung eines Stürmungsprofils (15) und ein Strömungsleitelement (16) zur Neigung der Luftströmung (4) unterhalb der Gleitfläche (2) vorgesehen sind.

2. Vorrichtung (1) nach Anspruch 1, **dadurch gekennzeichnet, dass** neben der auf die Werkstücke (3) einwirkenden Luftströmung (4) zumindest eine weitere Luftströmung (21) auf die Werkstücke (3) einwirkt, die in Bewegungsrichtung (6) der Werkstücke (3) gerichtet ist.

3. Vorrichtung (1) nach Anspruch 1 oder 2, **dadurch gekennzeichnet, dass** die Luftströmung (4) als ein die Gleitfläche (2) durchströmendes Luftkissen ausgebildet ist.

4. Vorrichtung (1) nach zumindest einem der vorhergehenden Ansprüche, **dadurch gekennzeichnet, dass** die Gleitfläche (2) als das Strömungsleitelement (16) ausgebildet ist.

5. Vorrichtung (1) nach Anspruch 4, **dadurch gekennzeichnet, dass** das Strömungsleitelement (16) einstellbar ist.

6. Vorrichtung (1) nach zumindest einem der vorhergehenden Ansprüche, **dadurch gekennzeichnet, dass** der Gleitfläche (2) ein oberhalb des Strömungsleitelementes (16) angeordnetes Lochblech (17) zugeordnet ist.

7. Vorrichtung (1) nach zumindest einem der vorhergehenden Ansprüche, **dadurch gekennzeichnet, dass** auf der dem Werkstück (3) abgewandten Seite der Gleitfläche (2) zumindest ein Gebläse (10) oder Lüfter angeordnet ist.

8. Vorrichtung (1) nach zumindest einem der vorhergehenden Ansprüche, **dadurch gekennzeichnet, dass** zwischen dem Gebläse (10) und der Gleitfläche (2) das erste Strömungselement (12) angeordnet ist, durch welches eine Gebläseluft (11) gleichmäßig über die Gleitfläche (2) verteilbar ist.

9. Vorrichtung (1) nach zumindest einem der vorhergehenden Ansprüche, **dadurch gekennzeichnet, dass** zwischen dem Strömungselement (12) und der Gleitfläche (2) das zweite Strömungselement (14) angeordnet ist, durch welches unterschiedliche Strömungsgeschwindigkeiten über die Gleitfläche (2) einstellbar sind.

10. Vorrichtung (1) nach Anspruch 8 oder 9, **dadurch gekennzeichnet, dass** die Strömungselemente (12, 14) jeweils zumindest zwei aufeinander und relativ zueinander bewegliche Lochbleche (18, 19) aufweisen.

11. Vorrichtung (1) nach zumindest einem der Ansprüche 8 bis 10, **dadurch gekennzeichnet, dass** die Strömungselemente (12, 14) jeweils zumindest ein Justierelement aufweisen.

## Claims

1. A device (1) for realizing a predetermined orientation of singularized work pieces (3) being transported on a sliding surface (2) by means of an air current (4) that acts upon the work pieces (3), wherein the air current (4) has an effective direction (5) that is inclined relative to a moving direction (6) of the work pieces (3) in such a way that an air current (7) resulting from the effective air current (8) and the air current (9) caused by the movement of the work piece (3) is arranged perpendicular to the moving direction (6) of the work pieces (3), **characterized in that** a first flow element (12) is provided for evening out the blower air (11), a second flow element (14) is provided for realizing a flow profile (15), and a flow control element (16) is provided underneath the sliding surface (2) in order to realize an incline of the air current (4).

2. The device (1) according to Claim 1, **characterized in that** at least one other air current (21) directed in the moving direction (6) of the work pieces (3) acts upon the work pieces (3) in addition to the air current (4) acting upon the work pieces (3).

3. The device (1) according to Claim 1 or 2, **characterized in that** the air current (4) is realized in the form of an air cushion that traverses the sliding surface (2).

4. The device (1) according to at least one of the preceding claims, **characterized in that** the sliding surface (2) is realized in the form of the flow control element (16).

5. The device (1) according to Claim 4, **characterized in that** the flow control element (16) is adjustable.

6. The device (1) according to at least one of the preceding claims, **characterized in that** a perforated plate (17) arranged above the flow control element (16) is assigned to the sliding surface (2).

7. The device (1) according to at least one of the preceding claims, **characterized in that** at least one blower (10) or fan is arranged on the side of the sliding surface (2) that faces away from the work piece (3).

8. The device (1) according to at least one of the preceding claims, **characterized in that** the first flow element (12) for evenly distributing the blower air (11) over the sliding surface (2) is arranged between the blower (10) and the sliding surface (2).

9. The device (1) according to at least one of the preceding claims, **characterized in that** the second flow element (14) for adjusting different flow speeds over the sliding surface (2) is arranged between the flow element (12) and the sliding surface (2).

10. The device (1) according to Claim 8 or 9, **characterized in that** the flow elements (12, 14) respectively feature at least two perforated plates (18, 19) that can be moved on one another and relative to one another.

11. The device (1) according to at least one of Claims 8 to 10, **characterized in that** the flow elements (12, 14) respectively feature at least one adjusting element.

## Revendications

1. Dispositif (1) pour produire une orientation prédéterminée de pièces (3) séparées les unes des autres, transportées sur une surface de glissement (2), au moyen d'un flux d'air (4) agissant sur les pièces (3), sachant que le flux d'air (4) possède une direction d'action (5) qui, par rapport à une direction de déplacement (6) des pièces (3), est incliné de telle sorte qu'un flux d'air (7) résultant du flux d'air actif (8) et du flux d'air (9) dû au mouvement de la pièce (3) est disposé perpendiculairement à la direction de déplacement (6) des pièces (3), **caractérisé en ce qu'**il est prévu en dessous de la surface de glissement (2) un premier élément d'écoulement (12) pour uniformiser l'air de soufflante (11), un deuxième élément d'écoulement (14) pour produire un profil d'écoulement (15), et un élément de guidage de flux (16) pour incliner le flux d'air (4).

2. Dispositif (1) selon la revendication 1, **caractérisé en ce qu'**en plus du flux d'air (4) agissant sur les pièces (3), au moins un autre flux d'air (21), qui est dirigé dans la direction de déplacement (6) des pièces (3), agit sur les pièces (3).

3. Dispositif (1) selon la revendication 1 ou 2, **caractérisé en ce que** le flux d'air (4) est réalisé sous la forme d'un coussin d'air s'écoulant à travers la surface de glissement (2).

4. Dispositif (1) selon au moins l'une quelconque des revendications précédentes, **caractérisé en ce que** la surface de glissement (2) est conçue comme élément de guidage de flux (16).

5. Dispositif (1) selon la revendication 4, **caractérisé en ce que** l'élément de guidage de flux (16) est réglable.

6. Dispositif (1) selon au moins l'une quelconque des revendications précédentes, **caractérisé en ce qu'**une tôle perforée (17) disposée au-dessus de l'élément de guidage de flux (16) est associée à la surface de glissement (2).

7. Dispositif (1) selon au moins l'une quelconque des revendications précédentes, **caractérisé en ce qu'**au moins une soufflante (10) ou un ventilateur est disposé(e) sur le côté de la surface de glissement (2) qui est opposé à la pièce (3).

8. Dispositif (1) selon au moins l'une quelconque des revendications précédentes, **caractérisé en ce que** le premier élément d'écoulement (12), par lequel l'air de soufflante (11) peut être réparti uniformément sur la surface de glissement (2), est disposé entre la soufflante (10) et la surface de glissement (2).

9. Dispositif (1) selon au moins l'une quelconque des revendications précédentes, **caractérisé en ce que** le deuxième élément d'écoulement (14), par lequel différentes vitesses d'écoulement peuvent être réglées sur la surface de glissement (2), est disposé entre l'élément d'écoulement (12) et la surface de glissement (2).

10. Dispositif (1) selon la revendication 8 ou 9, **caractérisé en ce que** les éléments d'écoulement (12, 14) présentent chacun au moins deux tôles perforées (18, 19) superposées et mobiles l'une par rapport à l'autre.

11. Dispositif (1) selon au moins l'une quelconque des revendications 8 à 10, **caractérisé en ce que** les éléments d'écoulement (12, 14) présentent chacun au moins un élément d'ajustement.
